# DEMANDE DE BREVET EUROPEEN

(11) **EP 0 550 304 A1**
(43) Date de publication de la demande: **07.07.1993**
(21) Numéro de dépôt: 92403391.3
(22) Date de dépôt: 14.12.1992
(51) Int. Cl.: F16C 1/28, F16C 1/10

(54) **Commande linéaire flexible monorail à billes**

(30) Priorité: 31.12.1991 FR 9116394
(71) Demandeur: Laudette née Richoux, Régine, F-47000 Agen (FR)
(72) Inventeur: Richoux, Raymond, F-40600 Biscarosse (FR)
(74) Mandataire: Bertrand, Didier

(57) **Abrégé**

Cette commande à billes monorail renferme un organe tubulaire d'accrochage du rail, monté rotatif à l'intérieur d'un manchon d'extrémité et comportant deux secteurs cylindriques complémentaire (13'', 16), l'un (13'') d'extension angulaire relativement grande, l'autre (16) d'extension angulaire relativement étroite sur lequel l'extrémité du rail est fixée grâce a des rivets traversant des orifices prévus dans le secteur étroit et dans le rail. Le manchon renferme aussi une bague (13') adjacente aux deux secteurs tubulaires.

## Description

L'invention concerne une commande à billes monorail, et plus précisément une commande du type décrit dans le document FR-A-2 583 838.

Ce document décrit un dispositif flexible tubulaire de transmission d'efforts longitudinaux qui comprend : une gaine tubulaire flexible à section circulaire ; une lame centrale plate souple disposée à l'intérieur de la gaine ; une première rangée de billes roulant dans un premier chemin de roulement creusé sur une première face de la lame centrale ; une deuxième rangée de billes roulant dans un deuxième chemin de roulement creusé sur la deuxième face, opposée à la première, de la lame centrale ; ainsi qu'une première et une deuxième cages à billes retenant les billes ; un rail métallique présentant une gorge de roulement pour les billes de l'une des rangées de billes, ledit rail étant appliqué contre la surface interne de la gaine ; un manchon tubulaire fixé à chaque extrémité de la gaine et renfermant un organe tubulaire d'accrochage du rail, monté rotatif à l'intérieur dudit manchon, calé axialement dans ledit manchon et comportant deux tronçons partiellement tubulaires d'un diamètre intérieur sensiblement égal au diamètre intérieur de la gaine.

Selon le document FR-A-2 583 828, les deux tronçons partiellement tubulaires sont symétriques et comportent des crans coopérant avec des crans prévus sur l'extrémité du rail pour arrimer celui-ci.

Selon un document encore antérieur FR-A-2 574 878, la fixation du rail est également obtenue par des crans formés sur un manchon d'ancrage. Or des rails ainsi échancrés conduisent à une diminution notable de la résistance du dispositif et des efforts à transmettre.

D'autre part, ces échancrures supposent aussi qu'on connaisse, préalablement à l'installation de la commande à billes, la longueur de la transmission, compte tenu des courbures de gaine, afin de connaître la longueur propre du rail et de réaliser son extrémité dans sa forme et avec ses crans appropriés avant moulage. Par conséquent, un changement chez l'utilisateur n'est pas possible.

Le but de l'invention est de proposer un dispositif du type cité en tête de ce mémoire, qui ne présente pas les inconvénients précités. Il est notamment de proposer une fixation de rail dans laquelle l'extrémité ne subit aucune déformation et peut être ajustée au montage sur la machine qui l'utilise.

Le but de l'invention est atteint du fait que les deux tronçons consistent un deux secteurs cylindriques complémentaires, l'un d'extension angulaire relativement grande, de préférence 3/4 de cercle environ, l'autre d'extension angulaire relativement étroite, de préférence 1/4 de cercle environ, sur lequel l'extrémité du rail est fixée grâce à des rivets traversant des orifices prévus dans ledit secteur étroit et dans le rail.

On peut ainsi facilement sectionner sur place le rail en fonction de sa longueur réelle d'utilisation et le fixer aisément sur la pièce d'accrochage tubulaire, laquelle est maintenue en place grâce à sa pièce complémentaire, les deux pièces reconstituant un tube à l'intérieur duquel les billes de la commande peuvent rouler.

Avantageusement, le manchon tubulaire forme un volume intérieur permettant de monter l'organe d'accrochage avec un certain jeu longitudinal.

En effet, la position de l'élément d'accrochage ou de butée de rail dans le volume qui lui est réservé à l'intérieur de la deuxième pièce de fixation, ne peut être réalisée en général avec une parfaite précision sans connaître les conditions de montage sur la machine.

Un certain réglage doit être prévu de l'extrémité du rail avec sa butée par rapport aux embouts fixes de la gaine. A cet effet la longueur du volume interne du manchon d'extrémité est supérieure, de 6 mm à 7 mm par exemple, à la longueur du tronçon d'accrochage de rail.

En plus des légères imprécisions sur la détermination de la longueur de la gaine et celle du rail équipé de sa pièce de butée, venant de la fabrication en usine, les chemins suivis par la gaine dans ses orientations, agissent sur les longueurs comparées du rail et de la gaine.

La pièce de butée sur le dos du rail sera fixée par trois rivets à l'extrémité du rail, dont la longueur aura été déterminée dans la position de montage de la transmission. Il faut noter que la butée est perforée à priori, ainsi que l'extrémité du rail sur une certaine longueur qui sera ajustée au rivetage.

Le jeu peut être comblé par une bague entretoise séparée des tronçons d'accrochage, ou bien, dans un autre mode de réalisation, solidaire du tronçon à large extension angulaire de manière à former avec lui une pièce unique qui peut prendre deux positions, selon que la partie d'entretoise est disposé avant ou après la partie qui reçoit le secteur d'accrochage.

D'autres caractéristiques et avantages de l'invention apparaîtront à la lecture de la description suivante. Il sera fait référence aux dessins annexés sur lesquels :
- la figure 1 est une vue en coupe longitudinale de l'extrémité d'une commande à billes, montrant le dispositif de fixation du rail, selon un premier mode de réalisation de l'invention, monté en rail long,
- la figure 2 est une vue en coupe semblable à la figure 1 monté en rail court,
- la figure 3 est une vue en coupe semblable à la figure 1, d'un second mode réalisation de l'invention, monté en rail long,
- les figures 4 et 5 sont des sections transversales IV-IV et V-V des figures 1 à 3.

La commande à billes représentée comporte, de manière classique, une gaine tubulaire flexible à section circulaire (1) renfermant une lame centrale souple (2) de transmission d'efforts formant deux chemins de roulement pour deux rangées de billes respectivement inférieures (3) et supérieures (4). Les billes (3, 4) sont retenues dans les évidements appropriés de deux cages à billes respectivement inférieure (5) et supérieure (6). Les billes inférieures (3) roulent directement sur la gaine (1) tandis que les billes supérieures (4) roulent sur un rail métallique flexible unique (7) appliqué contre la surface interne de la gaine (1) et comportant un chemin de roulement approprié. Chaque extrémité de gaine (1) reçoit un embout fixe (8), qui lui est ajusté grâce à une jupe (9) serrant la gaine (1). L'embout (8) porte un filetage (10) qui lui permet de recevoir par vissage un manchon de fixation (11) renfermant le dispositif de fixation du rail (7), mais laissant le passage de la lame centrale (2) et des billes (3, 4) jusqu'à un embout de commande (12) auquel elle est reliée.

Selon l'invention, le dispositif de fixation du rail comporte un tube (13) dont la longueur totale L correspond sensiblement à la longueur d'une cavité cylindrique (14) ménagée dans le manchon de fixation (11), entre l'extrémité frontale de l'embout (8) de gaine et une partie (15) de diamètre intérieur réduit du manchon de fixation (11).

Le tube (13) a un diamètre intérieur peu différent de celui de la gaine (1) de manière que les billes (3) et (4) puissent y passer également.

Le tube (13) est ouvert sur une partie A de sa longueur s'étendant jusqu'à un bord, et sur une partie angulaire C de sa circonférence correspondant sensiblement au quart, le tube (13) formant donc un tronçon ou secteur (13') s'étendant dans la région A seulement sur sensiblement les trois-quarts restants.

L'ouverture A, C du tube (13) peut être couverte par un secteur tubulaire (16) venant s'ajuster dans l'ouverture et servant à la fixation du rail (7). A cet effet, le secteur tubulaire (16) comporte trois orifices préétablis destinés au passage de trois rivets (17) qui passent également à travers trois lumières correspondantes préétablies dans le rail (7).

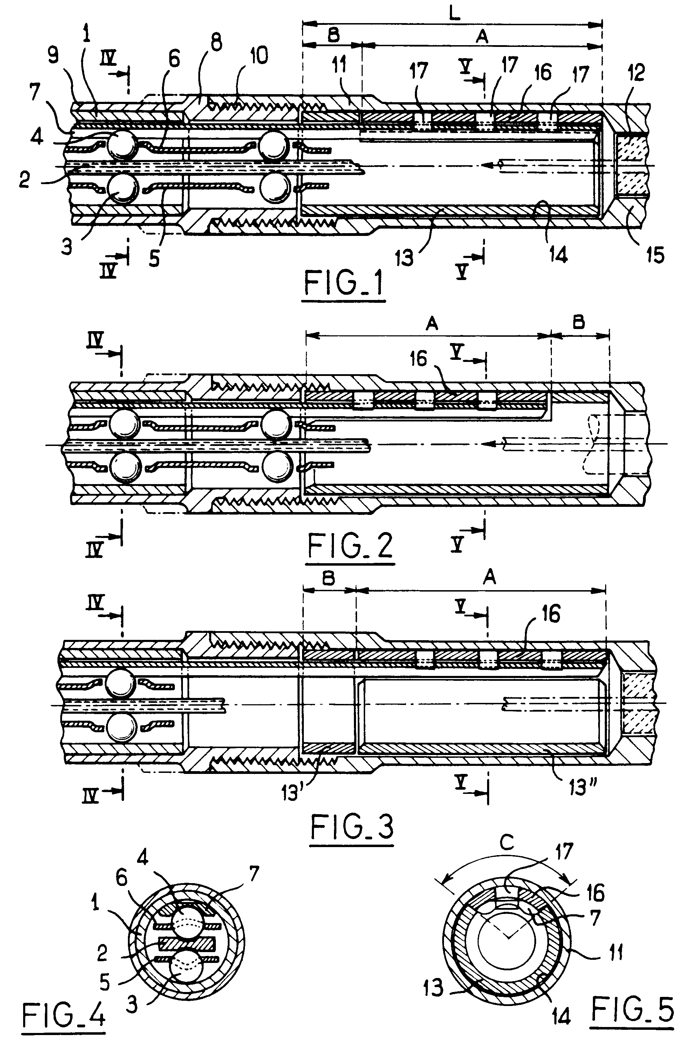

Sur la figure 1, le dispositif de fixation du rail (7) est monté en rail long, c'est à dire que le rail long, c'est-à-dire que le rail (7) vient se fixer derrière le tronçon (13'') du tube (13) correspondant à la longueur B, alors que sur le mode de réalisation en rail court représenté sur la figure 2, le rail (7) se fixe avant le tronçon (13'') du tube, celui-ci ayant été retourné.
Selon une variante de réalisation représentée sur la figure 3, le tube (13) est réalisé en deux parties distinctes (13'), (13'') sous forme d'une bague (13') correspondant à la partie B et d'un tronçon ouvert (13'') sur la partie A, ce tronçon (13'') recevant le secteur (16) de fixation de rail.

Dans un exemple particulier de réalisation pour une gaine souple de diamètre 8 X 10 mm avec une tige coulissante de 6 mm de diamètre (dans la partie (12)), la longueur libre L du volume intérieur du manchon de fixation (11) est de 30 mm, pour recevoir des tronçons de fixation de longueur A = 24 mm et une bague entretoise de longueur B = 6 mm ; cette longueur B représente le jeu de réglage disponible à chaque extrémité, soit pour l'ensemble de la commande une variation possible de 12 mm facilitant les montages en courbure.

Il est avantageux de choisir une gaine flexible (1) constituée dans un matériau à haute résistance sans déformation en longueur ni en diamètre pour des courbures de rayon atteignant 50 mm, par exemple les tubes en polyéthylène commercialisés sous la marque ECOTUBE par ACOME.

Les diamètres des billes inférieures (3) et supérieures (4) sont avantageusement choisis identiques (par exemple 3,2 mm) pour simplifier la fabrication, ce qui entraîne un léger décentrage de la lame centrale 2 par rapport à l'axe de la gaine (par exemple 1/4 de mm). Ce décentrage entraîne en courbure un décalage au niveau des embouts de fixation tout à fait minime qui peut être repris par le léger jeu de coulissement (par exemple 0,15 mm) laissé au tube (13) dans son logement à l'intérieur du manchon (11).

## Revendications

1. Dispositif flexible tubulaire de transmission d'efforts longitudinaux qui comprend : une gaine (1) tubulaire flexible à section circulaire ; une lame (2) centrale plate souple disposée à l'intérieur de la gaine ; une première rangée de billes (3) roulant dans un premier chemin de roulement creusé sur une première face de la lame centrale ; une deuxième rangée de billes (4) roulant dans un deuxième chemin de roulement creusé sur la deuxième face, opposée à la première, de la lame centrale ; ainsi qu'une première et une deuxième cages à billes (5,6) retenant les billes (3,4) ; un rail métallique (7) présentant une gorge de roulement pour les billes (4) de l'une des rangées de billes, ledit rail (7) étant appliqué contre la surface interne de la gaine (1) ; un manchon tubulaire (11) fixé à chaque extrémité de la gaine (1) ; et renfermant un organe tubulaire d'accrochage du rail, monté rotatif à l'intérieur dudit manchon, calé axialement dans ledit manchon (11) et comportant deux tronçons partiellement tubulaires (13", 16), d'un diamètre intérieur sensiblement égal au diamètre intérieur de la gaine (1)
**caractérisé en ce que**
les deux tronçons consistent en deux secteurs cylindriques complémentaire (13", 16), l'un (13") d'extension angulaire relativement grande, l'autre (16) d'extension angulaire relativement étroite sur lequel l'extrémité du rail (7) est fixée grâce à des rivets (17) traversant des orifices prévus dans ledit secteur étroit (16) et dans le rail (7).

2. Dispositif selon la revendication 1, caractérisé en ce que le manchon tubulaire renferme également une bague (13') adjacente aux deux tronçons tubulaires (13'', 16).

3. Dispositif selon la revendication 2, caractérisé en ce que ladite bague (13') est solidaire de l'un (13'') dedits tronçons.
